# FASCICULE DE BREVET EUROPEEN

(11) **EP 3 359 424 B1**
(45) Date de publication et mention de la délivrance du brevet: **28.08.2019**
(21) Numéro de dépôt: 16788164.8
(22) Date de dépôt: 03.10.2016
(51) Int. Cl.: B60R 21/04

(54) **DISPOSITIF D'ABSORPTION D'ÉNERGIE POUR COMPOSANT D'HABILLAGE INTÉRIEUR DE VÉHICULE AUTOMOBILE**
ENERGIEABSORPTIONSVORRICHTUNG FÜR EIN INNENVERKLEIDUNGSTEIL EINES KRAFTFAHRZEUGS
ENERGY ABSORPTION DEVICE FOR A MOTOR VEHICLE INTERIOR TRIM COMPONENT

(30) Priorité: 09.10.2015 FR 1559637
(43) Date de publication de la demande: 15.08.2018
(73) Titulaire: TREVES Products, Services & Innovation, 75008 Paris (FR)
(72) Inventeur: RIBES, Stéphane, 51140 Romain (FR); ELMIR, Abdellatif, 51100 Reims (FR); LUZURIER, Thibault, 51100 Reims (FR)
(74) Mandataire: Sayettat, Julien Christian
(86) Numéro de dépôt international: PCT/FR2016/052519
(87) Numéro de publication internationale: WO 2017/060592

(56) Documents cités:
- DE-A1- 10 244 948
- JP-A- 2007 137 288
- JP-A- 2007 160 987
- JP-A- 2011 131 707
- KR-B1- 100 859 201
- US-A1- 2005 161 982
- US-A1- 2010 253 114

## Description

L'invention concerne un dispositif d'absorption d'énergie pour composant d'habillage intérieur de véhicule automobile et un composant comprenant un tel dispositif.

Il est connu de réaliser un dispositif d'absorption d'énergie pour composant d'habillage intérieur de véhicule automobile, ledit dispositif comprenant une pluralité de plots creux en matériau plastique moulé, lesdits plots présentant une enveloppe extérieure s'inscrivant généralement dans un cylindre ou dans un tronçon de cône centré sur un axe de révolution, de sorte que ladite enveloppe présente une face courbe et une première et une deuxième face plane et circulaire, lesdits plots étant reliés entre eux par un moyen de liaison, lesdits plots comprenant :
- une base solidaire dudit moyen de liaison, ladite base s'étendant sensiblement selon ladite première face plane,
- une paroi courbe s'étendant selon ladite face courbe,
- une pluralité de lumières allongées axialement réalisées dans ladite paroi courbe, lesdites lumières vues de face étant symétriques par rapport audit axe, lesdites lumières étant en outre disposées selon une symétrie de rotation selon ledit axe.

On trouve par exemple de tels dispositifs dans la zone de pédalier d'un faux-plancher du véhicule, leur fonction étant de permettre, par ruine du plot se déformant plastiquement sous effort modéré du fait de la présence des lumières, une dissipation de l'énergie quand un pied de passager est projeté violemment vers l'avant, un tel agencement permettant de minimiser le risque de blessures dudit passager.

Un dispositif d'absorption d'énergie pour composant d'habillage intérieur de véhicule automobile selon le préambule de la revendication 1 est connu du document US 2005/0161982 A1.

Avec les agencements connus, il est courant d'enregistrer, en début d'impact du pied du passager, un pic initial de force important se résorbant après ruine partielle du plot.

Or, la présence d'un tel pic est source de dangerosité pour l'occupant qui, en début d'impact, subit une force de réaction excessive de la part du plot.

L'invention a pour but de pallier cet inconvénient.

On verra par la suite que de tels dispositifs peuvent être intégrés à d'autres composants qu'un faux-plancher.

Selon un premier aspect, l'invention propose un dispositif d'absorption d'énergie pour composant d'habillage intérieur de véhicule automobile, ledit dispositif comprenant une pluralité de plots creux en matériau plastique moulé, lesdits plots présentant une enveloppe extérieure s'inscrivant généralement dans un cylindre ou dans un tronçon de cône centré sur un axe de révolution, de sorte que ladite enveloppe présente une face courbe et une première et une deuxième face plane et circulaire, lesdits plots étant reliés entre eux par un moyen de liaison, lesdits plots comprenant :
- une base solidaire dudit moyen de liaison, ladite base s'étendant sensiblement selon ladite première face plane,
- une paroi courbe s'étendant selon ladite face courbe,
- une pluralité de lumières allongées axialement réalisées dans ladite paroi courbe, lesdites lumières vues de face étant symétriques par rapport audit axe, lesdites lumières étant en outre disposées selon une symétrie de rotation selon ledit axe,
ledit dispositif présentant en outre les caractéristiques suivantes :
- les bords desdites lumières s'étendant selon ledit axe sont conformés en escalier, de manière à définir une pluralité de marches,
- la distance entre lesdits bords décroit à mesure que l'on se rapproche de ladite base.

Le fait de prévoir une enveloppe extérieure s'inscrivant généralement dans un tronçon de cône se justifie notamment pour une question de démoulage requérant la création d'une dépouille sur le plot.

Par le terme « lumière », on entend une ouverture présentant un périmètre se refermant sur lui-même.

Lorsqu'il est dit que les lumières sont allongées axialement, on signifie qu'elles s'étendent selon l'axe de révolution sus-évoqué.

Lorsqu'il est dit que les lumières vues de face sont symétriques par rapport à l'axe de révolution, on se réfère à la symétrie observée après projection sur un plan perpendiculaire à l'axe de vision.

L'agencement proposé conduit à une forte atténuation du pic initial sus mentionné, permettant d'améliorer sensiblement la sécurité du passager.

Selon un deuxième aspect, l'invention propose un composant comprenant un tel dispositif.

D'autres particularités et avantages de l'invention apparaîtront dans la description qui suit, faite en référence aux figures jointes, dans lesquelles :

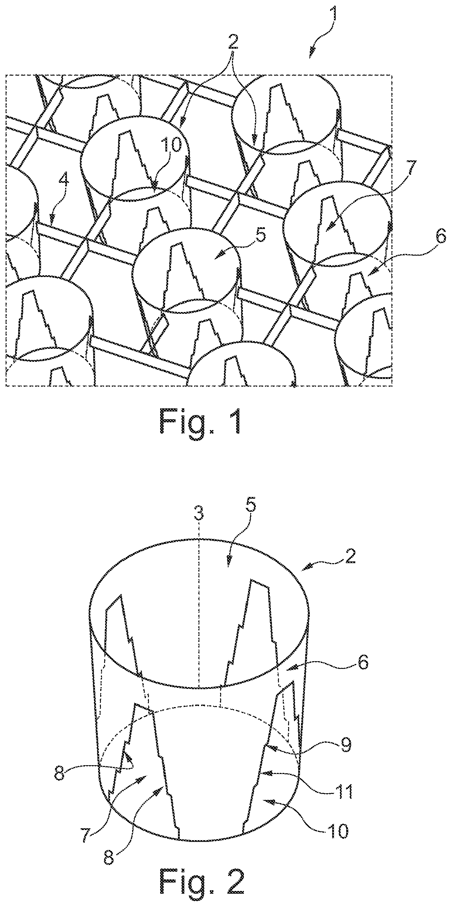

- la figure 1 est une vue schématique en perspective partielle d'un dispositif selon une réalisation,
- les figures 2 et 3 sont des vues schématiques en perspective (figure 2) et de face (figure 3) d'un plot du dispositif de la figure 1.

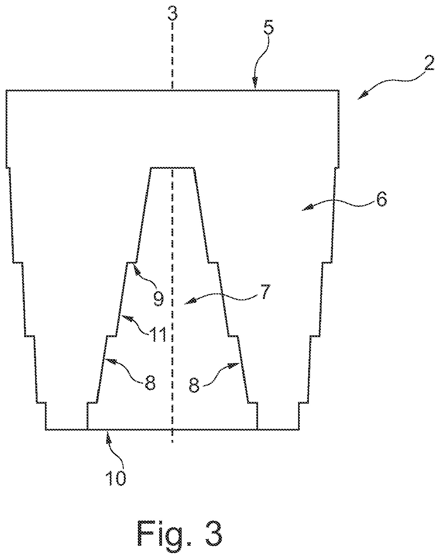

En référence aux figures, on décrit un dispositif 1 d'absorption d'énergie pour composant d'habillage intérieur de véhicule automobile, ledit dispositif comprenant une pluralité de plots 2 creux en matériau plastique moulé, lesdits plots présentant une enveloppe extérieure s'inscrivant généralement dans un cylindre, selon une réalisation non représentée, ou dans un tronçon de cône, selon la réalisation représentée, centré sur un axe de révolution 3, de sorte que ladite enveloppe présente une face courbe et une première et une deuxième face plane et circulaire, lesdits plots étant reliés entre eux par un moyen de liaison 4, lesdits plots comprenant :
- une base 5 solidaire dudit moyen de liaison, ladite base s'étendant sensiblement selon ladite première face plane,
- une paroi courbe 6 s'étendant selon ladite face courbe,
- une pluralité de lumières 7 allongées axialement réalisées dans ladite paroi courbe, lesdites lumières vues de face étant symétriques par rapport audit axe, lesdites lumières étant en outre disposées selon une symétrie de rotation selon ledit axe, comme illustré notamment en figure 3,
ledit dispositif comprenant en outre les caractéristiques suivantes :
- les bords 8 desdites lumières s'étendant selon ledit axe sont conformés en escalier, de manière à définir une pluralité de marches 9,
- la distance entre lesdits bords décroit à mesure que l'on se rapproche de ladite base.

Selon la réalisation représentée, la première face correspond à la grande face du plot 2 qui présente une enveloppe en tronçon de cône.

Selon la réalisation représentée, les plots 2 comprennent en outre une paroi de fond 10 s'étendant sensiblement selon la deuxième face plane, ladite paroi étant destinée à prendre appui - directement ou par l'intermédiaire d'un élément complémentaire tel qu'une couche de protection acoustique - sur un panneau de structure externe dudit véhicule - un tel panneau étant par exemple une tôle de plancher, de porte, ou de capot.

Lorsqu'il est dit que la paroi de fond 10 s'étend sensiblement selon la deuxième face plane, on signifie que ladite paroi peut comprendre éventuellement des décrochés ou présenter une inclinaison lui permettant de s'adapter à la géométrie du panneau de structure externe.

On précise ici que, dans la réalisation représentée, la deuxième face plane correspond à la petite face du plot 2 qui présente une enveloppe en tronçon de cône.

Selon une réalisation non représentée, la paroi de fond 10 peut être partiellement évidée, jusqu'à pouvoir présenter le cas échéant une forme en simple rondelle.

Selon une réalisation non représentée, en l'absence de paroi de fond 10, les lumières 7 se referment, à l'opposé de la base 5, par des ponts de matière formant une couronne périphérique.

Selon une réalisation, le nombre de lumières 7 est compris entre 3 et 6, étant notamment égal à 4 dans la réalisation représentée.

Selon la réalisation représentée, les plots 2 sont disposés en réseau à motif sensiblement répétitif.

Selon une réalisation, l'espacement entre deux axes de révolution 3 de deux plots 2 voisins est compris entre 30 et 80 mm.

Selon la réalisation représentée, le dispositif 1 est monobloc, les plots 2 et moyen de liaison 4 entre lesdits plots étant moulés d'une pièce.

Selon la réalisation représentée, un moyen de liaison 4 comprend une tige.

Selon une réalisation non représentée, un moyen de liaison 4 comprend une plaque.

Selon la réalisation représentée, les marches 9 sont perpendiculaires à l'axe de révolution 3.

Selon la réalisation représentée, les marches 9 sont pourvues de contremarches 11 présentent une inclinaison inférieure à 15° par rapport à l'axe de révolution 3.

Selon une réalisation non représentée, la zone de liaison entre une marche 9 et une contremarche 11 s'inscrit dans une courbe, un rayonnage pouvant être prévu dans ladite zone.

Selon une réalisation, les contremarches 11 ont une hauteur comprise entre 1 et 15 mm.

Selon une réalisation, les marches 9 ont une largeur comprise entre 1 et 5 mm.

Selon une réalisation, le nombre de marches 9 est compris entre 2 et 8, et en particulier égal à 3 selon la réalisation représentée.

Selon une réalisation, les plots 2 présentent une hauteur hors tout comprise entre 30 et 80 mm.

Selon une réalisation, le diamètre externe de la base 5 des plots 2 est compris entre 15 et 40 mm.

Selon une réalisation, les lumières 7 présentent une dimension axiale comprise entre 25 et 75 mm.

Selon une réalisation, l'épaisseur des parois 6,10 est comprise entre 0,8 et 2,5 mm, et en particulier de l'ordre de 1,2 mm.

On décrit à présent, de façon non représentée, un composant comprenant un tel dispositif 1, ledit composant étant notamment un faux plancher, un panneau de garnissage d'une porte, un pavillon ou un panneau de garniture sous capot, ledit composant comprenant en outre une structure, ledit dispositif étant rapporté sur ladite structure ou moulé d'une pièce avec ladite structure lorsqu'elle est à base de matériau plastique moulé.

## Revendications

1. Dispositif (1) d'absorption d'énergie pour composant d'habillage intérieur de véhicule automobile, ledit dispositif comprenant une pluralité de plots (2) creux en matériau plastique moulé, lesdits plots présentant une enveloppe extérieure s'inscrivant généralement dans un cylindre ou dans un tronçon de cône centré sur un axe de révolution (3), de sorte que ladite enveloppe présente une face courbe et une première et une deuxième face plane et circulaire, lesdits plots étant reliés entre eux par un moyen de liaison (4), lesdits plots comprenant :
• une base (5) solidaire dudit moyen de liaison, ladite base s'étendant sensiblement selon ladite première face plane,
• une paroi courbe (6) s'étendant selon ladite face courbe,
• une pluralité de lumières (7) allongées axialement réalisées dans ladite paroi courbe, lesdites lumières vues de face étant symétriques par rapport audit axe, lesdites lumières étant en outre disposées selon une symétrie de rotation selon ledit axe,
ledit dispositif étant **caractérisé en ce que** :
• les bords (8) desdites lumières s'étendant selon ledit axe sont conformés en escalier, de manière à définir une pluralité de marches (9),
• la distance entre lesdits bords décroit à mesure que l'on se rapproche de ladite base.

2. Dispositif selon la revendication 1, **caractérisé en ce que** les plots (2) comprennent en outre une paroi de fond (10) s'étendant sensiblement selon la deuxième face plane, ladite paroi étant destinée à prendre appui sur un panneau de structure externe dudit véhicule.

3. Dispositif selon l'une des revendications 1 ou 2, **caractérisé en ce que** le nombre de lumières (7) est compris entre 3 et 6.

4. Dispositif selon l'une quelconque des revendications 1 à 3, **caractérisé en ce que** les plots (2) sont disposés en réseau à motif sensiblement répétitif.

5. Dispositif selon l'une quelconque des revendications 1 à 4, **caractérisé en ce qu'**il est monobloc, les plots (2) et moyen de liaison (4) entre lesdits plots étant moulés d'une pièce.

6. Dispositif selon l'une quelconque des revendications 1 à 5, **caractérisé en ce que** les marches (9) sont perpendiculaires à l'axe de révolution (3).

7. Dispositif selon l'une quelconque des revendications 1 à 6, **caractérisé en ce que** le nombre de marches (9) est compris entre 2 et 8, et en particulier égal à 3.

8. Composant comprenant un dispositif (1) selon l'une quelconque des revendications 1 à 7, ledit composant comprenant en outre une structure, ledit dispositif étant rapporté sur ladite structure ou moulé d'une pièce avec ladite structure lorsqu'elle est à base de matériau plastique moulé.

## Patentansprüche

1. Energieabsorptionsvorrichtung (1) für eine Kraftfahrzeugs-Innenverkleidungskomponente, wobei die Vorrichtung eine Vielzahl von hohlen Noppen (2) aus geformtem Kunststoffmaterial umfasst, wobei die Noppen eine Außenhülle aufweisen, die sich allgemein in einen Zylinder oder in einen Kegelstumpf einfügt, der derart auf einer Drehachse (3) zentriert ist, dass die Hülle eine gekrümmte Fläche und eine erste und eine zweite ebene und kreisrunde Fläche aufweist, wobei die Noppen über ein Verbindungsmittel (4) miteinander verbunden sind, wobei die Noppen umfassen:
- eine Basis (5), die fest mit dem Verbindungsmittel verbunden ist, wobei sich die Basis im Wesentlichen entlang der ersten ebenen Fläche erstreckt,
- eine gekrümmte Wand (6), die sich entlang der gekrümmten Fläche erstreckt,
- eine Vielzahl von axial verlaufenden Durchbrüchen (7), die in der gekrümmten Wand ausgeführt sind, wobei die Durchbrüche von vorne gesehen in Bezug auf die Achse symmetrisch sind, wobei die Durchbrüche weiter gemäß einer Rotationssymmetrie entlang der Achse angeordnet sind,
wobei die Vorrichtung **dadurch gekennzeichnet ist, dass**:
- die Ränder (8) der Durchbrüche, die sich entlang der Achse erstrecken, als Treppe ausgestaltet sind, sodass sie eine Vielzahl von Stufen (9) bilden,
- der Abstand zwischen den Rändern abnimmt, je mehr man sich der Basis annähert.

2. Vorrichtung nach Anspruch 1, **dadurch gekennzeichnet, dass** die Noppen (2) weiter eine Bodenwand (10) umfassen, die sich im Wesentlichen entlang der zweiten ebenen Fläche erstreckt, wobei die Wand dazu bestimmt ist, an einer Außenstrukturplatte des Fahrzeugs anzuliegen.

3. Vorrichtung nach einem der Ansprüche 1 oder 2, **dadurch gekennzeichnet, dass** die Anzahl an Durchbrüchen (7) im Bereich zwischen 3 und 6 liegt.

4. Vorrichtung nach einem der Ansprüche 1 bis 3, **dadurch gekennzeichnet, dass** die Noppen (2) als Gitter mit sich im Wesentlichen wiederholendem Muster angeordnet sind.

5. Vorrichtung nach einem der Ansprüche 1 bis 4, **dadurch gekennzeichnet, dass** sie einteilig ist, wobei die Noppen (2) und die Verbindungsmittel (4) zwischen den Noppen aus einem Stück geformt sind.

6. Vorrichtung nach einem der Ansprüche 1 bis 5, **dadurch gekennzeichnet, dass** die Stufen (9) zur Drehachse (3) senkrecht sind.

7. Vorrichtung nach einem der Ansprüche 1 bis 6, **dadurch gekennzeichnet, dass** die Anzahl an Stufen (9) im Bereich zwischen 2 und 8 liegt und insbesondere gleich 3 ist.

8. Komponente, die eine Vorrichtung (1) nach einem der Ansprüche 1 bis 7 umfasst, wobei die Komponente weiter eine Struktur umfasst, wobei die Vorrichtung an der Struktur angebracht oder mit der Struktur aus einem Stück geformt ist, wenn dieselbe auf Basis von geformtem Kunststoffmaterial ist.

## Claims

1. Energy absorption device (1) for a motor vehicle interior trim component, said device comprising a plurality of hollow pads (2) made of moulded plastic material, said pads having an outer casing generally entering into a cylinder or into a cone section centred on an axis of revolution (3), such that said casing has a curved face and a first and a second flat and circular face, said pads being connected together by a connecting means (4), said pads comprising:
- a base (5) secured to said connecting means, said base extending substantially along said first flat face,
- a curved wall (6) extending along said curved face,
- a plurality of lights (7) axially elongated made in said curved wall, said front view lights being symmetrical with respect to said axis, said lights furthermore being arranged according to a symmetry of rotation about said axis,
said device being **characterised in that**:
- the edges (8) of said lights extending along said axis are shaped as stairs, so as to define a plurality of steps (9),
- the distance between said edges decreases as said base is approached.

2. Device according to claim 1, **characterised in that** the pads (2) further comprise a bottom wall (10) extending substantially along the second flat face, said wall being intended to bear onto an outer structural panel of said vehicle.

3. Device according to one of claims 1 or 2, **characterised in that** the number of lights (7) is between 3 and 6.

4. Device according to any one of claims 1 to 3, **characterised in that** the pads (2) are arranged in a network with a substantially repetitive pattern.

5. Device according to any one of claims 1 to 4, **characterised in that** it is one-piece, the pads (2) and connecting means (4) between said pads being moulded of one part.

6. Device according to any one of claims 1 to 5, **characterised in that** the steps (9) are perpendicular to the axis of revolution (3).

7. Device according to any one of claims 1 to 6, **characterised in that** the number of steps (9) is between 2 and 8, and in particular, equal to 3.

8. Component comprising a device (1) according to any one of claims 1 to 7, said component further comprising a structure, said device being returned on said structure or moulded of one part with said structure when it is made of a moulded plastic material.
